# EUROPEAN PATENT APPLICATION

(11) **EP 4 482 158 A1**
(43) Date of publication of application: **25.12.2024**
(21) Application number: 23752398.0
(22) Date of filing: 09.02.2023
(51) Int. Cl.: H04N 21/4402, H04N 19/40, H04N 21/44, H04N 5/268, H04N 21/81

(54) **VIDEO PROCESSING METHOD AND APPARATUS THEREOF**

(30) Priority: 14.02.2022 CN 202210134087
(71) Applicant: VIVO MOBILE COMMUNICATION CO., LTD., Dongguan, Guangdong 523863 (CN)
(72) Inventor: HAN, Jinwei, Dongguan, Guangdong 523863 (CN)
(74) Representative: Conti, Marco
(86) International application number: PCT/CN2023/075188
(87) International publication number: WO 2023/151618

(57) **Abstract**

This application discloses a video processing method and apparatus and pertains to the field of video processing technologies. The video processing method includes: separately coding image data acquired by a camera to obtain a first image bit stream and a second image bit stream; and generating a target video file based on the first image bit stream and the second image bit stream. The target video file includes a first video track and a second video track, the first image bit stream is located on the first video track, and the second image bit stream is located on the second video track.

## Description

### CROSS-REFERENCE TO RELATED APPLICATIONS

This application claims priority to Chinese Patent Application No.202210134087.6 filed in China on February 14, 2022, which is incorporated herein by reference in its entirety.

### TECHNICAL FIELD

This application pertains to the field of video processing technologies and specifically relates to a video processing method and apparatus.

### BACKGROUND

With the upgrading of terminal display devices, users have increasingly high requirements on video display quality. Currently, there are various image formats for video files, such as standard dynamic range images and high dynamic range images. Different image formats vary in parameters such as dynamic range and image detail, resulting in different display effects of videos. However, different image formats have different requirements on hardware of terminal display devices. Therefore, compatibility issues occur when video files are displayed on terminal display devices with different hardware conditions, resulting in a failure in achieving optimal display quality.

### SUMMARY

Embodiments of this application are intended to provide a video processing method and apparatus, so as to solve the problem of a failure in achieving optimal display quality due to compatibility issues that occur when video files are displayed on terminal display devices with different hardware conditions in the related art.

According to a first aspect, an embodiment of this application provides a video processing method. The method includes:
separately coding image data acquired by a camera to obtain a first image bit stream and a second image bit stream; and
generating a target video file based on the first image bit stream and the second image bit stream, where the target video file includes a first video track and a second video track, the first image bit stream is located on the first video track, and the second image bit stream is located on the second video track.

According to a second aspect, an embodiment of this application provides a video processing apparatus. The apparatus includes:
a coding module, configured to separately code image data acquired by a camera to obtain a first image bit stream and a second image bit stream; and
a generating module, configured to generate a target video file based on the first image bit stream and the second image bit stream, where the target video file includes a first video track and a second video track, the first image bit stream is located on the first video track, and the second image bit stream is located on the second video track.

According to a third aspect, an embodiment of this application provides an electronic device, where the electronic device includes a processor and a memory; the memory stores a program or instructions capable of running on the processor; and when the program or instructions are executed by the processor, the steps of the method according to the first aspect are implemented.

According to a fourth aspect, an embodiment of this application provides a readable storage medium, where the readable storage medium stores a program or instructions, and when the program or instructions are executed by a processor, the steps of the method according to the first aspect are implemented.

According to a fifth aspect, an embodiment of this application provides a chip, where the chip includes a processor and a communication interface, the communication interface is coupled to the processor, and the processor is configured to run a program or instructions to implement the method according to the first aspect.

According to a sixth aspect, an embodiment of this application provides a computer program product, where the computer program product is stored in a storage medium, and the computer program product is executed by at least one processor to implement the method according to the first aspect.

In the embodiments of this application, during video shooting, different coding methods are used for coding image data acquired by a camera to obtain a first image bit stream and a second image bit stream in different formats, and then a target video file is generated based on the first image bit stream and the second image bit stream, such that the target video file generated has different image formats so as to be compatible with display devices with different hardware conditions, thereby addressing compatibility issues of video files and allowing for convenient sharing of users.

### BRIEF DESCRIPTION OF DRAWINGS

FIG. 1 is a schematic flowchart of a video processing method according to an embodiment of this application;
FIG. 2 is a schematic flowchart of a video file uploading method according to an embodiment of this application;
FIG. 3 is a schematic flowchart of a target video file exporting method according to an embodiment of this application;
FIG. 4 is a schematic flowchart of a video file play method according to an embodiment of this application;
FIG. 5 is a schematic structural diagram of a video processing apparatus according to an embodiment of this application;
FIG. 6 is a schematic structural diagram of an electronic device according to an embodiment of this application; and
FIG. 7 is a schematic diagram of a hardware structure of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that data used in this way are interchangeable in appropriate circumstances such that the embodiments of this application can be implemented in an order other than those illustrated or described herein. In addition, "first" and "second" are typically used to distinguish between objects of a same type but do not limit the number of the objects. For example, there may be one or more first objects. In addition, "and/or" in the specification and claims represents at least one of connected objects, and the character "/" generally indicates that the contextually associated objects have an "or" relationship.

The following describes in detail the video processing method, video processing apparatus, electronic device, and readable storage medium provided in the embodiments of this application by using specific embodiments and application scenarios thereof with reference to the accompanying drawings.

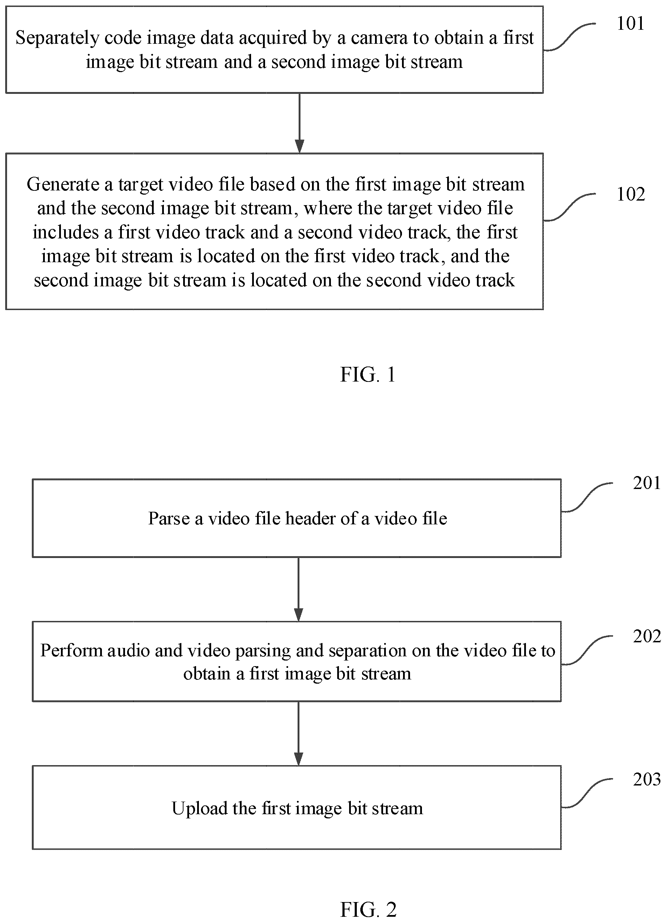

Referring to FIG. 1, FIG. 1 is a schematic flowchart of a video processing method according to an embodiment of this application. As shown in FIG. 1, according to an aspect, an embodiment of this application provides a video processing method. The method includes the following steps.

Step 101. Separately code image data acquired by a camera to obtain a first image bit stream and a second image bit stream.

In this embodiment of this application, optionally, the image data acquired by the camera is separately coded using different coding methods, specifically as follows: the image data acquired by the camera is coded using a first coding method to obtain a coded first image bit stream, and the image data acquired by the camera is coded using a second coding method to obtain a coded second image bit stream, where the first coding method and the second coding method are different coding methods, and the first image bit stream and second image bit stream obtained after coding are data in different image formats.

In some embodiments, for example, the first coding method may be advanced video coding (Advanced Video Coding, AVC), and the second coding method may be high efficiency video coding (High Efficiency Video Coding, HEVC), VP9, AVS2, AV1, or the like.

Step 102. Generate a target video file based on the first image bit stream and the second image bit stream, where the target video file includes a first video track and a second video track, the first image bit stream is located on the first video track, and the second image bit stream is located on the second video track.

In this embodiment of this application, after the first image bit stream and the second image bit stream are obtained through coding, the first image bit stream and the second image bit stream can be synthesized, to be specific, two video tracks are established, where the coded first image bit stream is written on the first video track, and the coded second image bit stream is written on the second video track, so as to obtain an ultimate target video file. In other words, the target video file obtained is compatible with two types of different image formats, thereby allowing users to conveniently share the target video file and addressing compatibility issues of video files in the related art.

Therefore, in this embodiment of this application, during video shooting, different coding methods are used for coding the image data acquired by the camera to obtain the first image bit stream and the second image bit stream in different formats, and then the target video file is generated based on the first image bit stream and the second image bit stream, such that the target video file generated has different image formats so as to be compatible with display devices with different hardware conditions, thereby addressing compatibility issues of video files and allowing for convenient sharing of users.

In some embodiments of this application, the generating a target video file based on the first image bit stream and the second image bit stream includes:
adding a first identifier into a video file header of the target video file, where
the first identifier is used to identify that the target video file is compatible with an image format corresponding to the first image bit stream and an image format corresponding to the second image bit stream.

In other words, in these embodiments of this application, the target video file can be identified to allow an electronic device to identify that the target video file is compatible, such that a corresponding policy can be executed in scenarios where the target video file is uploaded, shared, played, and the like in network. Optionally, the first identifier can be added into the video file header of the target video file, and the first identifier is used to identify that the target video file is compatible with the image format corresponding to the first image bit stream and the image format corresponding to the second image bit stream, thereby facilitating identification and processing of the target video file.

In some embodiments, optionally, a user-defined identifier, and a four-character code (Four-Character Code, FourCC) such as "vhdr" can be written into the video file header of the target video file to facilitate subsequent identification and processing of such type of video files.

In some embodiments of this application, the first image bit stream is in a standard dynamic range (Standard Dynamic Range, SDR) image format, to be specific, the first image bit stream corresponds to a standard dynamic range image; while the second image bit stream is in a high dynamic range (High Dynamic Range, HDR) image format, to be specific, the second image bit stream corresponds to a high dynamic range image.

Compared with an SDR video, an HDR video can widen a displayed range of brightness, exhibit more details of bright areas and dark areas, and provide more abundant colors and more vivid and natural detail representation, thereby allowing video images to be closer to what the human eyes see. However, HDR videos have requirements on coding, decoding, and display hardware. As a result, in the related art, the following compatibility issues exist in sharing HDR videos. First, HDR videos are not supported by application programs, and when an HDR video needs to be uploaded and shared, a direct prompt of Not Supported is provided. Second, when an HDR video shared by another device is acquired, the HDR video is compulsively transcoded into an SDR video due to hardware limitations, and if no corresponding algorithm is provided for the transcoding process, significant distortion may occur in most of the video images. In this case, image quality of the video obtained after transcoding is even inferior to that of other non-HDR videos, which undoubtedly deviates from the original intention of achieving higher image quality by sharing HDR videos.

In these embodiments of this application, the first image bit stream in the target video file is in a standard dynamic range SDR image format, while the second image bit stream is in a high dynamic range HDR image format, to be specific, the target video file is compatible with both the two formats, so even when an HDR video is uploaded and shared via an application program that does not support HDR videos, the target video file can still be successfully uploaded and shared. In addition, during uploading, the first image bit stream in the SDR image format that is commonly supported at present can be selected, so as to avoid the problem of decreased image quality of videos after the videos are uploaded and shared to platforms, thereby effectively addressing the foregoing compatibility issues.

In some embodiments of this application, after the generating a target video file based on the first image bit stream and the second image bit stream, the method further includes:
receiving a first input for the target video file by a user; and
in response to the first input, parsing the target video file to obtain the first image bit stream and uploading the first image bit stream to a target platform in a target application program.

In these embodiments, the target video file generated can be uploaded and shared to an Internet platform. For example, the target application program has an uploading and sharing function. If a first input for the target video file by the user is received, for example, the first input is an input that the target video file is selected from a sharing interface of the target application program, an electronic device parses the target video file in response to the first input to obtain the first image bit stream and unload the first image bit stream in the target application program. For example, the first image bit stream is an SDR image format that is commonly supported by the Internet at present. In this way, the target application program does not require an additional adaptive HDR video transcoding process and also avoids a problem of distortion caused by lack of an adaptive HDR algorithm after unloading in a transcoding process.

It should be noted that although the target video file includes the first image bit stream and the second image bit stream, for the target application program, the target video file is only a regular single video file, the target application program can use industry-standard procedures to directly parse and unload the first image bit stream on the first video track by default, without spending additional time, to be specific, the uploading speed remains unaffected.

In some embodiments, the target platform may be various social network sites, share platforms, share platforms in application programs, or the like. This is not specifically limited in the embodiments of this application. The forgoing unloading means that the first image bit stream is uploaded to the target platform via the Internet.

Referring to FIG. 2, FIG. 2 is a schematic flowchart of a video file uploading method according to an embodiment of this application. As shown in FIG. 2, in some embodiments of this application, the unloading method includes the following steps.

Step 201. Parse a video file header of the video file.

The video file header of the video file is parsed. If the video file header of the video file has a first identifier, the video file can be identified as a video file that has compatibility, meaning that the video file is compatible with different image formats. However, if the video file header of the video file has no first identifier, the video file can be considered as a common video.

Step 202. Perform audio and video parsing and separation on the video file to obtain the first image bit stream.

In this step, audio content and video content in the video file are separated first; and then for the video content whose video file header has a first identifier, the first image bit stream can be acquired from the first video track, and the second image bit stream can be acquired from the second video track.

Step 203. Upload the first image bit stream.

To avoid a situation that the target application program requires an additional adaptive HDR video transcoding process and avoid a problem of distortion caused by lack of an adaptive HDR algorithm after unloading in the transcoding process, it is possible to unload only the first image bit stream on the first video track and discard the second image bit stream. In the uploading process, the audio content is also uploaded for re-synthesis to obtain a complete video file.

In this way, the first image bit stream in the target video file is a standard dynamic range SDR image format, so even when an HDR video is uploaded and shared via an application program that does not support HDR videos, the target video file can still be successfully uploaded and shared. In addition, during uploading, the first image bit stream in an SDR image format that is commonly supported at present can be selected, so as to avoid the problem of decreased image quality of videos after the videos are uploaded and shared to platforms, thereby effectively addressing compatibility issues.

In some embodiments of this application, the video processing method is applied to a first electronic device, and after the generating a target video file based on the first image bit stream and the second image bit stream, the method further includes:
receiving a second input for the target video file by a user; and
in response to the second input, parsing the target video file to obtain a target image bit stream, encapsulating the target image bit stream to obtain a first video file, and transmitting the first video file to a second electronic device in communication connection with the first electronic device, where
the target image bit stream is either the first image bit stream or the second image bit stream.

In other words, in these embodiments, when the target video file is transmitted between different electronic devices, either the first image bit stream or the second image bit stream in the target video file can be selected for transmission. For example, the video processing method in the embodiments of this application is applied to the first electronic device, and the first electronic device and the second electronic device are in communication connection with each other, for example, in wired or wireless communication connection. If the second input for the target video file by the user is received, for example, if the second input is an input for transmitting/copying the target video file to the second electronic device, the first electronic device parses the target video file in response to the second input to obtain a target image bit stream, re-encapsulates the target image bit stream to obtain a first video file, and then transmits the first video file to the second electronic device. In this way, the user can select either the first image bit stream or the second image bit stream in the target video file for transmission depending on personal preference, while the whole exporting process does not involve transcoding, so the transmission time remains almost unchanged.

In some embodiments of this application, optionally, the target image bit stream may be the first image bit stream or the second image bit stream. For example, the target image bit stream can be determined by the second input, in other words, the second input by the user includes an input for setting the target image bit stream, that is, which one of the first image bit stream and the second image bit stream is set for this transmission. For another example, the target image bit stream can be preset, to be specific, during each transmission, the first image bit stream is transmitted by default, or the second image bit stream is transmitted by default.

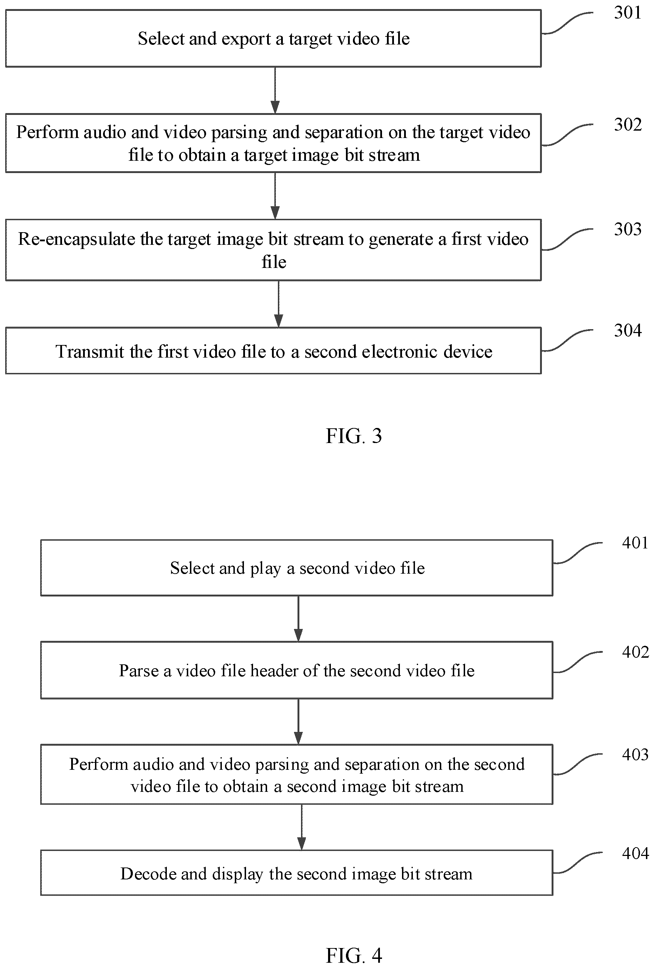

Referring to FIG. 3, FIG. 3 is a schematic flowchart of a target video file exporting method according to an embodiment of this application. As shown in FIG. 3, in some embodiments of this application, the exporting method includes the following steps.

Step 301. Select and export the target video file.

During target video file selection, options can be popped up in an export interface to allow the user to select which one of the first image bit stream and the second image bit stream in the target video file is to be exported.

Step 302. Perform audio and video parsing and separation on the target video file to obtain the target image bit stream.

In this step, audio content and video content in the target video file are separated first; and then for the video content, the first image bit stream can be acquired from the first video track, and the second image bit stream can be acquired from the second video track.

Step 303. Re-encapsulate the target image bit stream to generate a first video file.

The target image bit stream may be the first image bit stream or the second image bit stream. During re-encapsulation, the audio and the selected target image bit stream are re-encapsulated to obtain a first video file.

Step 304. Transmit the first video file to the second electronic device.

After encapsulation is completed, the first video file can be transmitted and exported to the second electronic device, and image bit streams that are not encapsulated are discarded. After the first video file is transmitted, the first video file that is newly generated in the first electronic device can be deleted.

In this way, the user can select either the first image bit stream or the second image bit stream in the target video file for transmission depending on personal preference, while the whole exporting process does not involve transcoding, so the transmission time remains almost unchanged.

In some other embodiments of this application, after the generating a target video file based on the first image bit stream and the second image bit stream, the method further includes:
receiving a third input for a second video file by a user;
in response to the third input, parsing a video file header of the second video file; and
in a case that the video file header of the second video file has the first identifier, decoding and playing a second image bit stream in the second video file.

In these embodiments, when the target video file generated is played, it can be played and displayed in an image format that is supported by the target video file and that has the optimal image quality. For example, if the third input for the second video file by the user is received, for example, the third input is an input of clicking the second video file, the electronic device parses the video file header of the second video file. If the video file header of the second video file has no first identifier, the second video file is played normally. If the video file header of the second video file has the first identifier, meaning that the second video file is compatible with the image format corresponding to the first image bit stream and the image format corresponding to the second image bit stream, the second video file is parsed, the second image bit stream on the second video track is acquired, and a decoder is created to decode the second image bit stream, followed by playing and displaying; while the parsed first image bit stream on the first video track can be directly discarded without creating a corresponding decoder, so that operating memory resources of a mobile phone are not occupied. Image quality of the second image bit stream is higher than that of the first image bit stream. In this way, the second video file is displayed with the optimal image quality to ensure the viewing experience of the user. In addition, the user does not need additional operations, so the burden of the user in selection is not increased.

Referring to FIG. 4, FIG. 4 is a schematic flowchart of a video file play method according to an embodiment of this application. As shown in FIG. 4, in some embodiments of this application, the play method includes the following steps.

Step 401. Select and play the second video file.

Step 402. Parse a video file header of the second video file.

The video file header of the second video file is parsed. If the video file header of the second video file has a first identifier, the second video file can be identified as a video file that has compatibility, meaning that the second video file is compatible with different image formats. However, if the video file header of the second video file has no first identifier, the second video file can be considered as a common video.

Step 403. Perform audio and video parsing and separation on the second video file to obtain the second image bit stream.

In this step, audio content and video content in the second video file are separated first; and then for the video content, the first image bit stream can be acquired from the first video track, and the second image bit stream can be acquired from the second video track.

Step 404. Decode and display the second image bit stream.

Image quality of the second image bit stream is higher than that of the first image bit stream. A corresponding decoder can be created to decode the second image bit stream, so that the second image bit stream is displayed on a display module of the electronic device; while the parsed second image bit stream is directly discarded without creating a corresponding decoder, so operating memory resources of a mobile phone are not occupied.

In this way, the second video file is displayed with the optimal image quality to ensure the viewing experience of the user. In addition, the user does not need additional operations, so the burden of the user in selection is not increased.

In some embodiments of this application, the first image bit stream is SDR 8bit, while the second image bit stream is HDR 10bit.

In conclusion, in these embodiments of this application, during video shooting, different coding methods are used for coding the image data acquired by the camera to obtain the first image bit stream and the second image bit stream in different formats, and then the target video file is generated based on the first image bit stream and the second image bit stream, such that the target video file generated has different image formats so as to be compatible with display devices with different hardware conditions, thereby addressing compatibility issues of video files and allowing for convenient sharing of users.

The video processing method provided in the embodiments of this application can be executed by a video processing apparatus. In the embodiments of this application, a video processing apparatus executing the video processing method is used as an example to describe the video processing apparatus provided in the embodiments of this application.

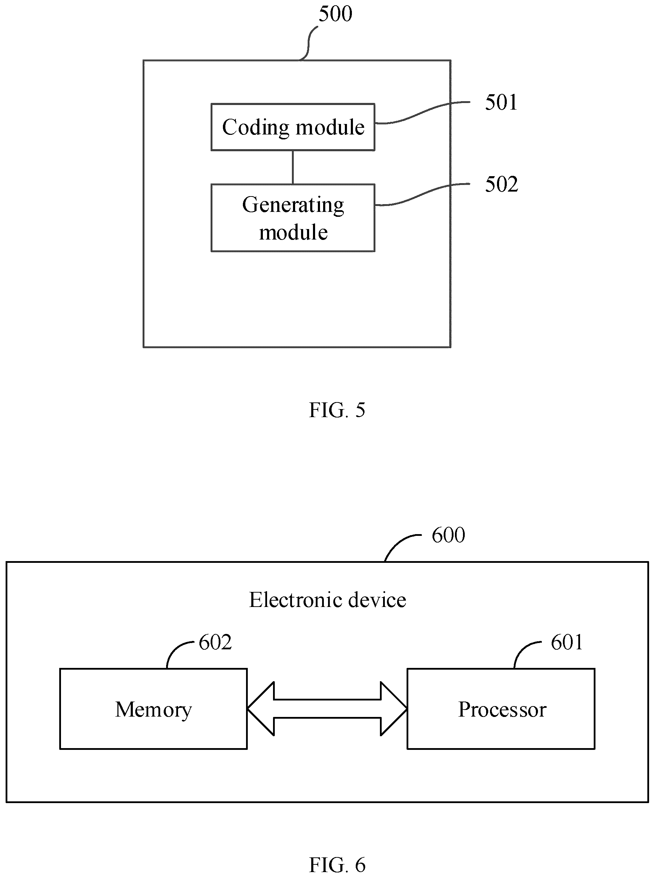

Referring to FIG. 5, FIG. 5 is a schematic structural diagram of a video processing apparatus according to an embodiment of this application. As shown in FIG. 5, according to another aspect, an embodiment of this application further provides a video processing apparatus. The apparatus 500 includes:
a coding module 501, configured to separately code image data acquired by a camera to obtain a first image bit stream and a second image bit stream; and
a generating module 502, configured to generate a target video file based on the first image bit stream and the second image bit stream, where the target video file includes a first video track and a second video track, the first image bit stream is located on the first video track, and the second image bit stream is located on the second video track.

Optionally, the first image bit stream is in a standard dynamic range image format, and the second image bit stream is in a high dynamic range image format.

Optionally, the generating module includes:
an adding unit, configured to add a first identifier into a video file header of the target video file, where
the first identifier is used to identify that the target video file is compatible with an image format corresponding to the first image bit stream and an image format corresponding to the second image bit stream.

Optionally, the apparatus further includes:
a first receiving module, configured to receive a first input for the target video file by a user; and
an uploading module, configured to, in response to the first input, parse the target video file to obtain the first image bit stream and upload the first image bit stream to a target platform in a target application program.

Optionally, the apparatus is applied to a first electronic device, and the apparatus further includes:
a second receiving module, configured to receive a second input for the target video file by a user; and
a transmitting module, configured to, in response to the second input, parse the target video file to obtain a target image bit stream, encapsulate the target image bit stream to obtain a first video file, and transmit the first video file to a second electronic device in communication connection with the first electronic device, where
the target image bit stream is either the first image bit stream or the second image bit stream.

Optionally, the apparatus further includes:
a third receiving module, configured to receive a third input for a second video file by a user; and
a play module, configured to play a video file header of the second video file in response to the third input and decode and play a second image bit stream in the second video file in a case that the video file header of the second video file has the first identifier.

In this embodiment of this application, during video shooting, different coding methods are used for coding image data acquired by a camera to obtain a first image bit stream and a second image bit stream in different formats, and then a target video file is generated based on the first image bit stream and the second image bit stream, such that the target video file generated has different image formats so as to be compatible with display devices with different hardware conditions, thereby addressing compatibility issues of video files and allowing for convenient sharing of users.

The video processing apparatus in this embodiment of this application may be an electronic device, or may be a component such as an integrated circuit or a chip in the electronic device. The electronic device may be a terminal or other devices than terminals. For example, the electronic device may be a mobile phone, a tablet computer, a notebook computer, a palmtop computer, a vehicle-mounted electronic device, a mobile Internet device (Mobile Internet Device, MID), an augmented reality (Augmented Reality, AR)/virtual reality (Virtual Reality, VR) device, a robot, a wearable device, an ultra-mobile personal computer (Ultra-Mobile Personal Computer, UMPC), a netbook, or a personal digital assistant (Personal Digital Assistant, PDA), and may also be a personal computer (Personal Computer, PC), a television (Television, TV), a teller machine, a self-service machine, or the like. This is not specifically limited in the embodiments of this application.

The video processing apparatus in this embodiment of this application may be an apparatus having an operating system. The operating system may be an android (Android) operating system, an iOS operating system, or another possible operating system. This is not specifically limited in the embodiments of this application.

The video processing apparatus provided in this embodiment of this application can implement the processes implemented in the method embodiments of FIG. 1 to FIG. 4. To avoid repetition, details are not described herein again.

Optionally, as shown in FIG. 6, an embodiment of this application further provides an electronic device 600 including a processor 601 and a memory 602. The memory 602 stores a program or instructions capable of running on the processor 601. When the program or the instructions are executed by the processor 601, the steps of the foregoing video processing method embodiments are implemented, with the same technical effects achieved. To avoid repetition, details are not described herein again.

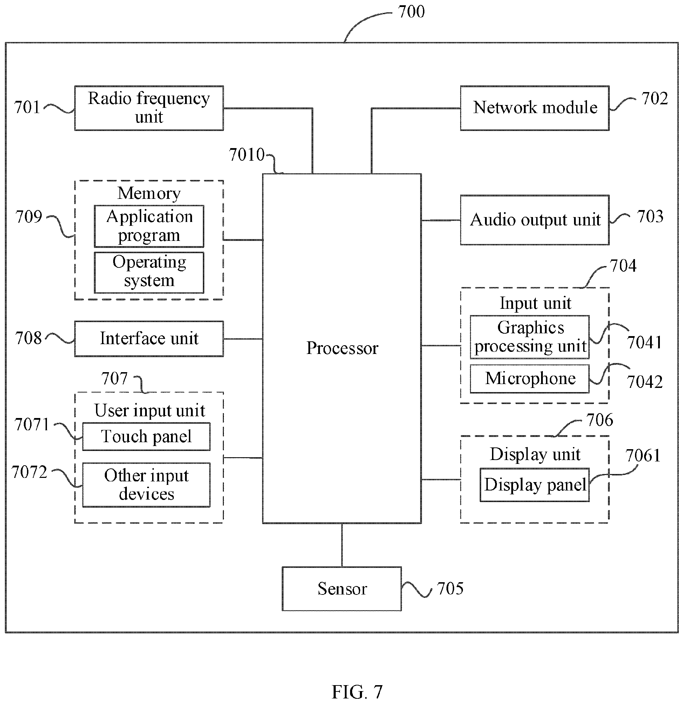

FIG. 7 is a schematic diagram of a hardware structure of an electronic device according to an embodiment of this application.

The electronic device 700 includes but is not limited to components such as a radio frequency unit 701, a network module 702, an audio output unit 703, an input unit 704, a sensor 705, a display unit 706, a user input unit 707, an interface unit 708, a memory 709, and a processor 7010.

It can be understood by persons skilled in the art that the electronic device 700 may further include a power supply (for example, a battery) supplying power to the components. The power supply may be logically connected to the processor 7010 via a power management system, so that functions such as charge management, discharge management, and power consumption management are implemented via the power management system. The structure of the electronic device shown in FIG. 7 does not constitute a limitation on the electronic device. The electronic device may include more or fewer components than shown in the figure, or combine some of the components, or arrange the components differently. Details are not described herein.

The processor 7010 is configured to separately code image data acquired by a camera by using different coding methods to obtain a first image bit stream and a second image bit stream.

The processor 7010 is further configured to generate a target video file based on the first image bit stream and the second image bit stream, where the target video file includes a first video track and a second video track, the first image bit stream is located on the first video track, and the second image bit stream is located on the second video track.

In this embodiment of this application, during video shooting, different coding methods are used for coding image data acquired by a camera to obtain a first image bit stream and a second image bit stream in different formats, and then a target video file is generated based on the first image bit stream and the second image bit stream, such that the target video file generated has different image formats so as to be compatible with display devices with different hardware conditions, thereby addressing compatibility issues of video files and allowing for convenient sharing of users.

Optionally, the first image bit stream is in a standard dynamic range image format, and the second image bit stream is in a high dynamic range image format.

Optionally, the processor 7010 is further configured to add a first identifier into a video file header of the target video file, where
the first identifier is used to identify that the target video file is compatible with an image format corresponding to the first image bit stream and an image format corresponding to the second image bit stream.

Optionally, the user input unit 707 is configured to receive a first input for the target video file by a user; and
the processor 7010 is further configured to, in response to the first input, parse the target video file to obtain the first image bit stream and upload the first image bit stream to a target platform in a target application program.

Optionally, the electronic device is a first electronic device, and the user input unit 707 is further configured to receive a second input for the target video file by the user; and
the processor 7010 is further configured to, in response to the second input, parse the target video file to obtain a target image bit stream, encapsulate the target image bit stream to obtain a first video file, and transmit the first video file to a second electronic device in communication connection with the first electronic device, where
the target image bit stream is either the first image bit stream or the second image bit stream.

Optionally, the user input unit 707 is further configured to receive a third input for the second video file by the user;
the processor 7010 is further configured to parse a video file header of the second video file in response to the third input; and
the display unit 706 is configured to decode and play a second image bit stream in the second video file in a case that the video file header of the second video file has the first identifier.

It should be understood that in this embodiment of this application, the input unit 704 may include a graphics processing unit (Graphics Processing Unit, GPU) 7041 and a microphone 7042. The graphics processing unit 7041 processes image data of a static picture or video obtained by an image capture apparatus (for example, a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (for example, a volume control button or a power on/off button), a trackball, a mouse, and a joystick. Details are not described herein.

The memory 709 may be configured to store software programs and various data. The memory 709 may include a first storage area for storing programs or instructions and a second storage area for storing data. The first storage area may store an operating system, an application program or instructions required by at least one function (for example, a sound playback function or an image playback function), and the like. In addition, the memory 709 may be a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch Link DRAM, SLDRAM), and a direct rambus random access memory (Direct Rambus RAM, DRRAM). The memory 709 in this embodiment of this application includes but is not limited to these and any other applicable types of memories.

The processor 7010 may include one or more processing units. Optionally, the processor 7010 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 7010.

An embodiment of this application further provides a readable storage medium. The readable storage medium stores a program or instructions, and when the program or instructions are executed by a processor, the processes of the foregoing video processing method embodiments are implemented, with the same technical effects achieved. To avoid repetition, details are not described herein again.

The processor is the processor in the electronic device in the foregoing embodiments. The readable storage medium includes a computer-readable storage medium such as a computer read-only memory, a random access memory, a magnetic disk, or an optical disc.

An embodiment of this application further provides a chip. The chip includes a processor and a communication interface, the communication interface is coupled to the processor, and the processor is configured to run a program or instructions to implement the processes of the foregoing video processing method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program product, where the program product is stored in a storage medium, and the program product is executed by at least one processor to implement the processes of the foregoing video processing method embodiments, with the same technical effects achieved. To avoid repetition, details are not described herein again.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and various steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is a more preferred implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

## Claims

1. A video processing method, comprising:
separately coding image data acquired by a camera to obtain a first image bit stream and a second image bit stream; and
generating a target video file based on the first image bit stream and the second image bit stream, wherein the target video file comprises a first video track and a second video track, the first image bit stream is located on the first video track, and the second image bit stream is located on the second video track.

2. The video processing method according to claim 1, wherein the generating a target video file based on the first image bit stream and the second image bit stream comprises:
adding a first identifier into a video file header of the target video file, wherein
the first identifier is used to identify that the target video file is compatible with an image format corresponding to the first image bit stream and an image format corresponding to the second image bit stream.

3. The video processing method according to claim 1, wherein after the generating a target video file based on the first image bit stream and the second image bit stream, the video processing method further comprises:
receiving a first input for the target video file by a user; and
in response to the first input, parsing the target video file to obtain the first image bit stream and uploading the first image bit stream to a target platform in a target application program.

4. The video processing method according to claim 1, applied to a first electronic device, wherein after the generating a target video file based on the first image bit stream and the second image bit stream, the video processing method further comprises:
receiving a second input for the target video file by a user; and
in response to the second input, parsing the target video file to obtain a target image bit stream, encapsulating the target image bit stream to obtain a first video file, and transmitting the first video file to a second electronic device in communication connection with the first electronic device, wherein
the target image bit stream is either the first image bit stream or the second image bit stream.

5. The video processing method according to claim 2, wherein after the generating a target video file based on the first image bit stream and the second image bit stream, the video processing method further comprises:
receiving a third input for a second video file by a user;
in response to the third input, parsing a video file header of the second video file; and
in a case that the video file header of the second video file has the first identifier, decoding and playing a second image bit stream in the second video file.

6. A video processing apparatus, comprising:
a coding module, configured to separately code image data acquired by a camera to obtain a first image bit stream and a second image bit stream; and
a generating module, configured to generate a target video file based on the first image bit stream and the second image bit stream, wherein the target video file comprises a first video track and a second video track, the first image bit stream is located on the first video track, and the second image bit stream is located on the second video track.

7. The video processing apparatus according to claim 6, wherein the generating module comprises:
an adding unit, configured to add a first identifier into a video file header of the target video file, wherein
the first identifier is used to identify that the target video file is compatible with an image format corresponding to the first image bit stream and an image format corresponding to the second image bit stream.

8. The video processing apparatus according to claim 6, further comprising:
a first receiving module, configured to receive a first input for the target video file by a user; and
an uploading module, configured to, in response to the first input, parse the target video file to obtain the first image bit stream and upload the first image bit stream to a target platform in a target application program.

9. The video processing apparatus according to claim 6, applied to a first electronic device, wherein the video processing apparatus further comprises:
a second receiving module, configured to receive a second input for the target video file by a user; and
a transmitting module, configured to, in response to the second input, parse the target video file to obtain a target image bit stream, encapsulate the target image bit stream to obtain a first video file, and transmit the first video file to a second electronic device in communication connection with the first electronic device, wherein
the target image bit stream is either the first image bit stream or the second image bit stream.

10. The video processing apparatus according to claim 7, further comprising:
a third receiving module, configured to receive a third input for a second video file by a user; and
a play module, configured to play a video file header of the second video file in response to the third input and decode and play a second image bit stream in the second video file in a case that the video file header of the second video file has the first identifier.

11. An electronic device, comprising a processor and a memory, wherein the memory stores a program or instructions capable of running on the processor, and when the program or instructions are executed by the processor, the steps of the video processing method according to any one of claims 1 to 5 are implemented.

12. A readable storage medium, wherein the readable storage medium stores a program or instructions, and when the program or instructions are executed by a processor, the steps of the video processing method according to any one of claims 1 to 5 are implemented.

13. A chip, wherein the chip comprises a processor and a communication interface, the communication interface is coupled to the processor, and the processor is configured to run a program or instructions to implement the video processing method according to any one of claims 1 to 5.

14. A computer program product, wherein the computer program product is stored in a storage medium, and the computer program product is executed by at least one processor to implement the method according to any one of claims 1 to 5.
